# EUROPEAN PATENT APPLICATION

(11) **EP 1 533 989 A2**
(43) Date of publication of application: **25.05.2005**
(21) Application number: 04257183.6
(22) Date of filing: 19.11.2004
(51) Int. Cl.: H04N 1/00

(54) **Imaging apparatus and method**

(30) Priority: 20.11.2003 US 718741
(71) Applicant: Fujifilm Electronic Imaging Limited, Hemel Hempstead, Herts, HP2 7RH (GB)
(72) Inventor: Bittner, Christoph, Hemel Hempstead Herts HP3 9PT (GB)
(74) Representative: Skone James, Robert Edmund

(57) **Abstract**

Imaging apparatus comprises a record medium support (5) on which a record medium (6) is mounted in use. A radiation beam generator (1) generates a radiation beam modulated with imaging data which is directed towards the support. A system is provided for causing relative scanning movement between the beam and the support. A detection system (10) detects radiation emitted from the support (5) or the record medium (6) in response to incident radiation from the radiation beam generator (1) and having a wavelength different from the incident radiation so as to monitor for a change in intensity of the detected radiation indicative of the passage of the record medium edge.

## Description

The invention relates to imaging apparatus and a method of detecting the location of an edge of a record medium on a support.

Imaging apparatus typically comprises a record medium support on which the record medium is mounted in use; a radiation beam generator for generating a radiation beam modulated with imaging data which is directed towards the support; and a system for causing relative scanning movement between the beam and the support. Examples include internal and external drum scanners and flat bed scanners. Some apparatus of this type are known as computer-to-plate (CTP) engines in which a radiation sensitive plate is mounted on the support and exposed to a laser beam.

To start an exposure on a CTP engine the plate has to be discriminated against the background of the support. The background is usually a black metallic or polymer surface. The plate is placed on the support which can be either a flatbed, internal or external drum. The position is either predetermined by registration pins or is not restricted so the medium can move on the support over a certain distance range. The benefits of not restricting the movement are considerable: the plate edge is no longer damaged and the registration mechanism is less expensive and faster.

The exposure of the plate has to start precisely at the plate edge. If the plate position on the support is variable, an edge detector is needed to look for the edge and trigger the exposure start.

Typical solutions use a laser of non-exposing wavelength. The laser beam is either reflected, scattered or absorbed by the plate and a detector looks for a change in intensity and compares it with a fixed threshold intensity. The laser could also point toward the drum surface and look for any intensity change when the plate moves into the beam. Another solution is to use the exposure laser and direct light illumination to look for the opaque plate edge as described in EP-A-0882581. This can be done with a highly attenuated exposure laser beam to prevent unwanted plate exposure.

US-A-4532429 describes the detection of a leading edge by using a scanning laser beam which is reflected from the surface of a media sheet and gives a contrast against the background. Another example uses a standard laser triangulation sensor for an edge detection application. This technique uses the height difference between the medium and the background to detect the edge position. The detection is prone to intensity differences between the two surfaces and can show an ambiguous signal at the plate edge.

Inherent problems of these detection mechanisms include:
1. sensitivity against optical changes of the plate surface or structure,
2. sensitivity against optical changes of the drum surface or structure due to machining, wear or deposition of plate material debris,
3. low contrast between plate and surface,
4. changing threshold levels,
5. additional costs for a second laser and detector,
6. offset of the edge detector against the exposure beam position,
7. calibration issues to measure the offset between detection and exposure beam,
8. fixed location of the side register point.

Thus, most detection mechanisms use stray light detection or specular reflection from the plate surface and compare this signal against the signal from the drum or support surface. The detection mechanism uses backscatter detectors and they start to deteriorate after a extensive use. Aluminium from the plate back surface is rubbed into the surface of the drum and gives a shiny bright reflective surface. A straylight detector detects the intensity difference between the dark drum and the flat. This is the reason why the drum has to be cleaned in regular intervals.

In accordance with one aspect of the present invention, imaging apparatus comprises a record medium support on which a record medium is mounted in use; a radiation beam generator for generating a radiation beam modulated with imaging data which is directed towards the support; a system for causing relative scanning movement between the beam and the support; and a detection system for detecting radiation emitted from the support or record medium in response to incident radiation from the radiation beam generator, the emitted radiation having a different wavelength from the incident radiation, so as to monitor for a change in intensity of the detected radiation indicative of the passage of the record medium edge.

In accordance with a second aspect of the invention, a method of detecting the location of an edge of a record medium on a support comprises scanning a radiation beam across the support; monitoring radiation emitted from the support and record medium having a wavelength different from the radiation beam; and detecting the location of the record medium edge when a change in intensity of emitted radiation is detected.

We have recognised that typical supports and record media exhibit different abilities to emit wavelengths different from the wavelength of the normal exposing radiation beam and this difference in property can be detected and is indicative of the edge of the record medium.

A typical example is a variation in fluorescence but other types of radiation exhibiting such a wavelength change include Raman or anti-Raman radiation, in the case of thermal imaging.

Typically, the record medium will be a plate but in practice any image board medium, typically a laser image board medium is suitable.

In general, the record medium will exhibit a higher intensity fluorescence than the support although this is not essential and these properties could be reversed.

The main advantage of using fluorescent light is the high contrast between background surface and plate surface. Contrast ratios of 1:1000 are typical. In most cases, the background is non-emitting and virtually black. It is made from black material like black anodized aluminium or black polymer granite to catch the straylight of the exposure beam and to prevent plate fogging. This material is usually non-fluorescent. The plate material is fluorescent and orders of magnitude brighter then the background material.

This is the reason why this detection mechanism is almost insensitive to the problems which arise with other plate edge detection mechanisms:
1. Sensitivity against mechanical surface damage or changes in surface roughness is much reduced because the fluorescence detector doesn't see the polymer surface of a plate but only the polymer layer underneath.
2. No sensitivity to changes in support surface like scratching, aluminium deposits or surface wear because the support surface is virtually black (in case of plate fluorescence).
3. High contrast between plate and support.
4. No changing threshold levels because of the high signal-to-noise ratio and constant intensity levels of plate fluorescence and support surface.
5. Costs are similar or better compared to edge detectors using a second laser and detector when the optical path is shared between exposure laser and fluorescence detector.
6. No mechanical offset between exposure and edge detector beam because they are physically identical.
7. The position of the edge detector is variable. It can be used on the left and right edge of the plate and at any position along this edge (top to bottom). The radiation beam can scan every position of the plate edge.

The reason for the high contrast between plate and support is the different chemical composition of plate and support surface.

Preferably, in order to avoid undesired exposure of the record medium, the radiation beam generator is operable in an edge detection mode and an imaging mode, the intensity of the radiation in the edge detection mode being less than that in the imaging mode. Preferably, in this case, the radiation beam generator is operable in response to the detection of a change in intensity of the detected radiation to switch to the imaging mode.

In general, an optical system is provided to guide the imaging radiation to the support.

The detection system can be separate or combined with the optical system.

A separate detection optics should sit near the focal point of the imaging radiation on the record medium e.g. on a stray light baffle to capture as much light as possible. The detector is either a diode, avalanche diode or photomultiplier equipped with a long pass filter in front to exclude laser radiation from the detector. The filter is non-transmissive for the exposure laser radiation and transmissive for the fluorescent radiation.

A combined arrangement shares most of the optical system with the exposing radiation beam. Some straylight and the emitted radiation are emitted from the focal point on the record medium. A small part of this radiation enters a downstream lens of the optical system and propagates back towards the radiation generator. Somewhere in the optical path the imaging radiation and emitted radiation are separated. To achieve this, a dichroic element may be inserted into the light path e.g. a dichroic beam splitter plate or dichroic mirror. If a mirror is used, the imaging radiation is reflected and the longer wavelength emitted radiation is transmitted. The isolated emitted radiation is filtered further or goes direct to a sensitive photodetector which could be either a photomultiplier or an avalanche photodiode.

To achieve a good discrimination between record medium and support surface, the intensity level on the detector is less important. The intensity contrast between record medium and support is more important. To overcome the problems of low detection intensities, a more sensitive photodector can be used like a photomultiplier or avalanche photodiode. They have internal amplification factors of 10³ to 10⁶.

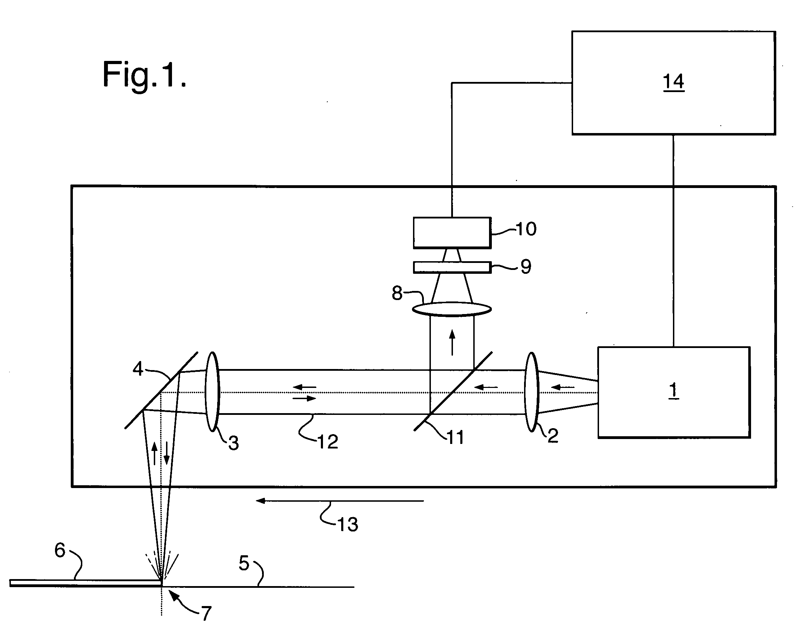

An example of imaging apparatus according to the invention will now be described with reference to the accompanying drawing, in which:-
Figure 1 is a schematic block diagram of the apparatus.

The apparatus shown in Figure 1 comprises the main components of a conventional internal drum image scanner for use as a CTP engine. This comprises a laser 1 which generates a beam 12 which is collimated by a lens 2 and fed to a final exposure lens 3. A spinning mirror 4 receives the radiation beam 12 and reflects it, in a fast scan direction, onto the internal surface of a drum 5.

The components 1-4 are mounted on a support (not shown) which is moved relatively slowly, for example by turning a lead screw (not shown), in a slow scan direction indicated by an arrow 13. The mirror 4 rotates at high speed so that the beam, which is focussed onto the support 5, scans in a fast, circumferential direction.

A recording plate 6 is mounted on the internal surface of the drum 5 and it will be seen in Figure 1 that the slow and fast scan movements will cause the beam 12 (which is modulated with image data) to scan across the plate 6 in a series of parallel scan lines.

In order to detect the edge of the plate 6, the laser 1 is used as a light source. Its intensity is reduced in an edge detection mode to a level well below the exposure threshold of the plate. When an edge is detected, the laser is switched back to full exposure intensity (imaging mode) by a controlling computer 14. If the beam 13 scans the support surface 5, no fluorescent light is generated. When a fluorescent plate surface 6 comes into the beam, fluorescent light is generated. The laser light penetrates the polymer layer on the CTP plate 6 and is absorbed by dye molecules. Sensitizing dyes are part of every polymer layer, they convert the laser photons into reactive species like radicals or acids. They could also break bonds (in case of Diazo dyes) or simply generate molecular motion (= heat). Most radical generating dyes are flourescent dyes. They are excited by the laser light and pass on the energy to radical releasing species. A part of the light is then absorbed and converted to a lower energy level and re-emitted as fluorescent light. The fluorescent dye acts as a weak lambertian emitter which emits over the whole 2n angle.

At the focal point 7 of the imaging system the laser beam hits the plate surface. The focal point is the point with the highest laser power density. The energy penetrates the surface and a large fraction of the laser energy is absorbed in the polymer material of the plate. Other parts are backreflected, backscattered and converted to longer wavelengths. The wavelength conversion is caused by fluorescence of the sensitising dye in the polymer layer. The incoming laser beam is directed and polarized but the fluorescence radiation is no longer polarized and has no preferred beam direction. The radiation pattern of the fluorescence emitter is lambertian, so the radiation is emitted in all directions. A selective fluorescence detector will be able to "see" the fluorescent light as long as the radiation can reach the detector and a sufficient solid angle is covered to give a good signal to noise ratio.

The easiest way to detect the fluorescent radiation is to use the optics of the exciting laser beam. A small part of the fluorescent light is reflected onto the spinner mirror 4 and enters the final lens 3, travels back along the exposure light path and is separated from the laser light with a wavelength selective element e.g. a dichroic mirror 11. The transmitted fluorescent light is detected with a sensitive light detector 10 which could be a either a photomultiplier or an avalanche photodiode.

A filter 9 on front of the detector 10 blocks all light at the exposure laser wavelength so the detector sees a black surface when no fluorescence dye is present. As soon as a plate 6 with fluorescent dye comes into the optical path, the detector sees a strong signal. Polymer plates have a high dye concentration to absorb most of the light which is the reason for the strong fluorescence of the plate.

Compared to absorbed, reflected and scattered light, the fluorescent light is only a small fraction. But the different wavelength allows good separation of this light and gives a superior signal to noise ratio compared to other optical edge detection methods.

The controller 14 monitors the intensity detected by the detector 10 and when it detects a change in intensity, by comparing the received intensity with a predetermined threshold, indicating the arrival of a plate edge, it causes the laser 1 to emit radiation at the higher imaging intensity.

In the preferred embodiment, the plate material 6 is fluorescent and the drum 5 is non-fluorescent. The exposing laser 1 should be a frequency doubled YAG laser (532 nm) or a GaN diode laser of 405 +/- 10 nm. The plate material is a polymer plate which can be either a violet sensitized Fujifilm LP-NV plate or a green sensitized plate like the Fujifilm LP-N3 or Agfa N91.

To use negative contrast or the bi-level edge detection, the drum material 5 is fluorescent and the plate material 6 is non-fluorescent. In this case, the drum 5 can be made from anodized aluminium and is stained with a fluorescent dye. A good method is the immersion into a dye solution after the rough anodizing. The dye soaks into the submicroscopic caves of the aluminium oxide and is trapped. In the last step the oxide is sealed in boiling waterand the dye is fixed. If a Zanite or polymer concrete drum is used, the dye could be added to the outer polymer layer of the polymer concrete. In this case the plate can be a non-fluorescent Lithostar LAP-V plate.

To use the edge detect method for both non-fluorescent and fluorescent plates, the drum 5 should have an intermediate fluorescence level. If a fluorescent polymer plate 6 is used, the plate fluorescence is much brighter then the drum. A threshold level between drum and plate can be used. For a non-fluorescent plate, the drum shows a higher intensity level and a threshold between plate and drum has to be used. Hence a slightly fluorescent drum and selectable threshold intensity (Bi-level threshold) facilitates the use of both fluorescent and non-fluorescent plates in this edge detection mechanism.

## Claims

1. Imaging apparatus comprising a record medium support on which a record medium is mounted in use; a radiation beam generator for generating a radiation beam modulated with imaging data which is directed towards the support; a system for causing relative scanning movement between the beam and the support; and a detection system for detecting radiation emitted from the support or record medium in response to incident radiation from the radiation beam generator, the emitted radiation having a different wavelength from the incident radiation, so as to monitor for a change in intensity of the detected radiation indicative of the passage of the record medium edge.

2. Apparatus according to claim 1, wherein the radiation beam generator is operable in an edge detection mode and in an imaging mode, the intensity of the radiation beam in the edge detection mode being less than that in the imaging mode.

3. Apparatus according to claim 2, wherein the radiation beam generator is responsive to the detection of a change in intensity of emitted radiation detected by the detection system to switch between the edge detection and imaging modes.

4. Apparatus according to any of the preceding claims, wherein the emitted radiation is one of fluorescent, Raman and anti-Raman radiation.

5. Apparatus according to any of the preceding claims, further comprising an optical system for guiding the imaging radiation to the support, the optical system also being adapted to guide the emitted radiation to the detection system.

6. Apparatus according to claim 5, wherein the optical system includes a wavelength splitter for diverting the emitted radiation to the detection system.

7. Apparatus according to any of the preceding claims, wherein the apparatus comprises one of a flat bed, internal, and external drum scanner.

8. Apparatus according to any of the preceding claims, wherein the support is fluorescent.

9. Apparatus according to any of claims 1 to 7, wherein the support is not fluorescent.

10. Apparatus according to any of the preceding claims, further comprising a record medium on the support.

11. Apparatus according to claim 9, wherein the record medium exhibits a higher intensity fluorescence than the support when exposed to radiation from the radiation beam generator.

12. A method of detecting the location of an edge of a record medium on a support, the method comprising scanning a radiation beam across the support; monitoring radiation emitted from the support and record medium having a wavelength different from the radiation beam; and determining the location of the record medium edge when a change in intensity of emitted radiation is detected.

13. A method according to claim 12, further comprising modulating the radiation beam with imaging data when it scans across the record medium.

14. A method according to claim 12 or claim 13, wherein the emitted radiation is one of fluorescent, Raman and anti-Raman radiation.

15. A method according to any of claims 12 to 14, wherein the support comprises one of a flat bed, internal, and external drum.

16. A method according to any of claims 12 to 15, wherein the support is not fluorescent.

17. A method according to any of claims 12 to 15, wherein the support is less fluorescent than the record medium.

18. A method according to any of claims 12 to 15, wherein the support is more fluorescent than the record medium.
